# EUROPEAN PATENT SPECIFICATION

(11) **EP 3 367 000 B1**
(45) Date of publication and mention of the grant of the patent: **09.12.2020**
(21) Application number: 17158466.7
(22) Date of filing: 28.02.2017
(51) Int. Cl.: F23R 3/34, F02C 7/228, F02C 9/34, F02C 9/40

(54) **FUEL DELIVERY SYSTEM AND METHOD FOR A COMBUSTOR**
KRAFTSTOFFAUSGABESYSTEM UND -VERFAHREN FÜR EINE BRENNKAMMER
SYSTÈME ET PROCÉDÉ DE DISTRIBUTION DE CARBURANT POUR UNE CHAMBRE DE COMBUSTION

(43) Date of publication of application: 29.08.2018
(73) Proprietor: General Electric Technology GmbH, 5400 Baden (CH)
(72) Inventor: PROVIDAKIS, Theodoros, 5400 Baden (CH); MEEUWISSEN, Thiemo, 5400 Baden (CH); MARCHIONE, Teresa, 5400 Baden (CH)
(74) Representative: BRP Renaud & Partner mbB Rechtsanwälte Patentanwälte Steuerberater

(56) References cited:
- DE-A1-102008 053 755
- US-A1- 2001 047 650
- US-A1- 2012 159 953
- US-A1- 2012 247 119
- US-A1- 2013 340 438

## Description

### BACKGROUND

The field of the disclosure relates generally to combustors, and more particularly, to systems and methods for delivering fuel to a combustor having a plurality of burners.

At least some known combustors, such as some known combustors for use with gas turbine engines, include burners that have staged fuel delivery systems. More specifically, the burner receives a relatively large amount of fuel, such as fuel oil, from a pilot stage during start-up and/or low load operation, and receives most of the fuel from a premix stage during high load operation. The premix stage may be configured to reduce the generation of pollutant emissions, such as oxides of nitrogen (NOx), at a high combustion flame temperature by, for example, improving pre-vaporization of the liquid fuel and/or mixing of the fuel and air. However, under at least some operating conditions, a high premix flame temperature may also be associated with potential flame-generated pressure fluctuations or pulsations. Therefore, under such conditions, at least some fuel delivery systems are configured to shift a portion of the fuel flow for each burner back to the pilot stage to improve overall combustion stability. To decrease the relatively higher NOx emissions associated with the pilot stage, at least some known fuel injection systems inject water along with the liquid fuel in the pilot stage. A large amount of water may be required to reduce such NOx emissions to an acceptable level, which decreases an efficiency of the rotary machine. Moreover, water injection further may require a water treatment system to be added to the plant, increasing an installation and maintenance cost of the combustor.

US 2012/247119 A1 and US 2001/047650 A1 each describe a fuel delivery system for a combustor of a gas turbine engine. The combustor includes a plurality of circumferentially disposed burners, each burner including a pilot fuel injector and a premix fuel injector. A controller of the system is operatively coupled to activate and deactivate each premix and each pilot fuel injector of the plurality of burners.

In the fuel delivery system of US 2012/247119 A1 the controller is programmed to operate the plurality of the circumferentially disposed fuel injectors to achieve an optimal circumferential pattern factor of the combusted medium before it is delivered to the gas turbine, whereas in the delivery system of US 2001/047650 A1 the controller is programmed to use 54 internally piloted of a total of 72 burners of the combustor in a low load phase and 18 premix burners and the 54 burners in a transition load phase in which the 18 premix burners are started and in which the fuel feed in each of the 54 burners is increasingly displaced from the internally piloted operating mode to the premix activation. In a subsequent high load phase the internally piloted operating mode is completely displaced and all 72 burners are run in the premix mode.

Further fuel delivery systems for a combustor of a gas turbine engine in which the combustor includes a plurality of burners, each burner having a pilot fuel injector and a premix fuel injector, are described in US 2013/340438 A1 and in US 2012/159953 A1.

DE 10 2008 053755 A1 describes a fuel delivery system for a combustor of a gas turbine engine in which the combustor comprises a plurality of burners. The single burners each comprise a pilot injector system with two or more pilot injectors which can be operated in stages. Thus, at low pilot fuel quantities only one of the two or more pilot injectors of the single burner is active and can then be operated in a stable and reaction-free working area.

### BRIEF DESCRIPTION

In one aspect, a fuel delivery system for a combustor is provided. The fuel delivery system is defined in the independent claim 1.

In another aspect, a method of operating a combustor is provided. The method is defined in the independent claim 8.

### BRIEF DESCRIPTION OF THE DRAWINGS

FIG. 1 is a schematic view of an exemplary rotary machine;
FIG. 2 is a schematic view of an exemplary fuel delivery system that may be used with a plurality of burners of a combustor section of the rotary machine shown in FIG. 1;
FIG. 3 is a flow diagram of an exemplary method of operating a combustor that includes a plurality of burners, such as the combustor section of the rotary machine shown in FIG. 1;
FIG. 4 is a continuation of the flow diagram of FIG. 3; and
FIG. 5 is a graph of a premix stage flame temperature, a number of burners having activated pilot injectors, and a total of NOx emissions by all burners during execution of one embodiment of the exemplary method shown in FIG. 3.

### DETAILED DESCRIPTION

The exemplary methods and systems described herein overcome at least some disadvantages of known combustors. More specifically, the embodiments according to the herein claimed invention include a fuel delivery system and method in which each pilot injector of a subset of a plurality of burners is activated during a high load phase of the combustor. The subset includes more than zero, but fewer than all of the plurality of burners. According to the herein claimed invention, each pilot injector of the plurality of burners is activated during a low load phase of the combustor, and then the pilot injectors of certain burners are deactivated during a transition from the low load phase to the high load phase. For example, a number of burners in the subset having activated pilot stages is selected such that NOx emissions summed over all burners are below a NOx emissions limit for the combustor, without any water injection at the pilot injectors.

Unless otherwise indicated, approximating language, such as "generally," "substantially," and "about," as used herein indicates that the term so modified may apply to only an approximate degree, as would be recognized by one of ordinary skill in the art, rather than to an absolute or perfect degree. Additionally, unless otherwise indicated, the terms "first," "second," etc. are used herein merely as labels, and are not intended to impose ordinal, positional, or hierarchical requirements on the items to which these terms refer. Moreover, reference to, for example, a "second" item does not require or preclude the existence of, for example, a "first" or lower-numbered item or a "third" or higher-numbered item. As used herein, the term "upstream" refers to a forward or inlet end of a gas turbine engine, and the term "downstream" refers to an aft or nozzle end of the gas turbine engine.

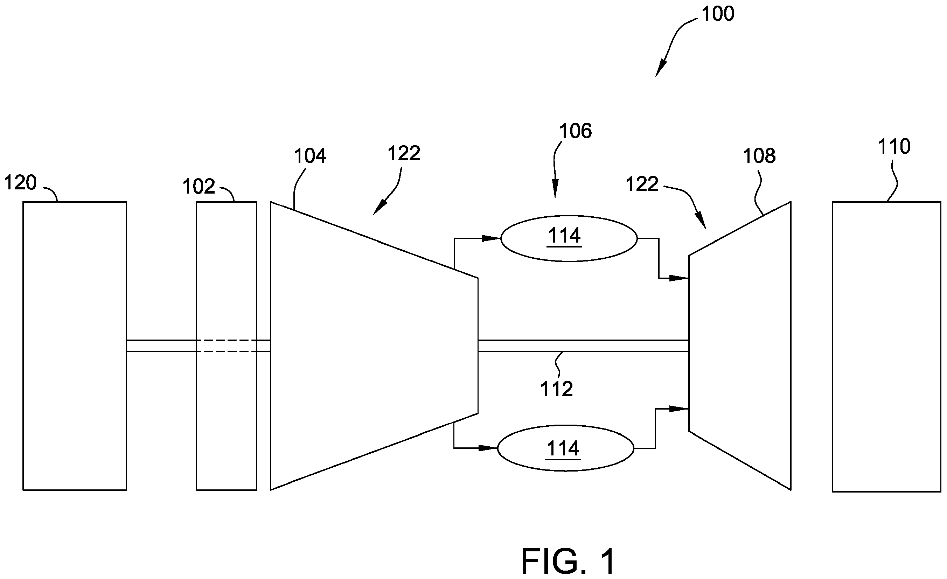

FIG. 1 is a schematic view of an exemplary rotary machine 100. In the exemplary embodiment, rotary machine 100 is a gas turbine engine. Alternatively, rotary machine 100 may be any other turbine engine and/or rotary machine, including, without limitation, a gas turbofan aircraft engine or other aircraft engine. In the exemplary embodiment, rotary machine 100 includes an intake section 102, a compressor section 104 coupled downstream from intake section 102, a combustor section 106 coupled downstream from compressor section 104, a turbine section 108 coupled downstream from combustor section 106, and an exhaust section 110 coupled downstream from turbine section 108. Turbine section 108 is coupled to compressor section 104 via a rotor shaft 112. It should be noted that, as used herein, the term "couple" is not limited to a direct mechanical, electrical, and/or communication connection between components, but may also include an indirect mechanical, electrical, and/or communication connection between multiple components. In the exemplary embodiment, combustor section 106 includes a plurality of burners 114. Combustor section 106 is coupled to compressor section 104 such that each of burners 114 is in flow communication with compressor section 104. Rotor shaft 112 is further coupled to a load 120 such as, but not limited to, an electrical generator and/or a mechanical drive application. In the exemplary embodiment, each of compressor section 104 and turbine section 108 includes at least one rotor assembly 122 that is coupled to rotor shaft 112.

During operation, intake section 102 channels air towards compressor section 104. Compressor section 104 compresses air and discharges compressed air into combustor section 106 and towards turbine section 108. More specifically, pressurized compressed air is channeled to plurality of burners 114 wherein the air is mixed with fuel and ignited to generate high temperature combustion gases. The combustion gases are directed into turbine section 108 to facilitate imparting a rotational force on rotor assembly 122.

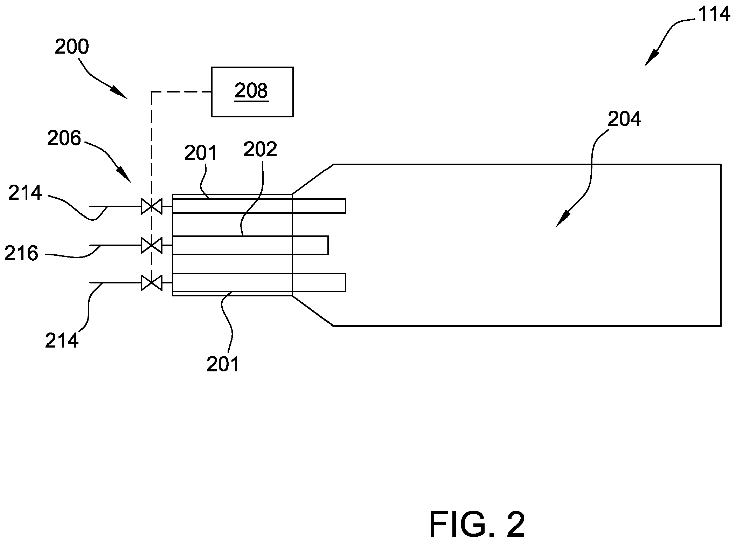

FIG. 2 is a schematic view of an exemplary fuel delivery system 200 for use with plurality of burners 114. In the exemplary embodiment, each burner 114 includes a premix injector 201, a pilot injector 202, and a combustion chamber 204. Premix injector 201 is configured to provide premixed fuel and air to combustion chamber 204, and pilot injector 202 is configured to provide fuel to combustion chamber 204. Combustion chamber 204 is further configured to receive combustion air (not shown), such as pressurized air supplied by compressor section 104 (shown in FIG. 1), for combustion with the injected premixed fuel and/or pilot fuel. Each of premix injector 201, pilot injector 202, and combustion chamber 204 has any suitable configuration that enables burner 114 to function as described herein.
According to the herein claimed invention, fuel delivery system 200 includes, for each burner 114 of the plurality of burners 114, a premix fuel supply line 214 coupled in flow communication with premix injector 201, and a pilot fuel supply line 216 coupled in flow communication with pilot injector 202. Each of fuel supply lines 214 and 216 is also coupled in flow communication with a suitable fuel source, for example, a source of gaseous fuel, such as but not limited to natural gas, or a source of liquid fuel, such as but not limited to fuel oil. Moreover, in some embodiments, at least one of fuel supply lines 214 and 216 is selectively switchable between a gaseous fuel supply and a liquid fuel supply, such that at least one of injectors 201 and 202 is operable to selectively combust either gaseous or liquid fuel.

In the exemplary embodiment, fuel delivery system 200 further includes, for each burner 114, a plurality of valves 206, and each valve 206 is operatively coupled to a respective one of fuel supply lines 214 and 216. More specifically, each valve 206 is operable to control a flow of fuel delivered from the respective one of fuel supply lines 214 or 216 to the corresponding one of injectors 201 and 202. Pilot injector 202 of each burner 114 is considered to be "activated" when the respective valve 206 is at least partially open such that fuel is provided from pilot fuel supply line 216 to pilot injector 202, and "deactivated" when the respective valve 206 is closed such that no fuel is provided from pilot fuel supply line 216 to pilot injector 202. Similarly, premix injector 201 of each burner 114 is considered to be "activated" when the respective valve 206 is at least partially open such that fuel is provided from premix fuel supply line 214 to premix injector 201, and "deactivated" when the respective valve 206 is closed such that no fuel is provided from premix fuel supply line 214 to premix injector 201.

Further according to the herein claimed invention, fuel delivery system 200 includes a controller 208 operatively coupled to each premix injector 201 and pilot injector 202 of each burner 114. For example, in the exemplary embodiment, controller 208 is operatively coupled to injectors 201 and 202 via valves 206. More specifically, controller 208 is configured to selectively activate and deactivate injectors 201 and 202 of each burner 114 via selective actuation of each of valves 206. Alternatively, controller 208 is operatively coupled to, and configured to selectively activate and deactivate, each premix injector 201 and pilot injector 202 of each burner 114 in any suitable fashion that enables fuel delivery system 200 to function as described herein.

In certain embodiments, controller 208 is further programmed to selectively switch fuel supply lines 214 and/or 216 between a gaseous fuel supply and a liquid fuel supply, as described above.

In some embodiments, controller 208 is implemented using one or more electronic or computing devices. Such devices typically include a processing device such as a general purpose central processing unit (CPU), a graphics processing unit (GPU), a microcontroller, a reduced instruction set computer (RISC) processor, an application specific integrated circuit (ASIC), a programmable logic circuit (PLC), a field programmable gate array (FPGA), a digital signal processing (DSP) device, and/or any other circuit or processing device capable of executing the functions described herein. The methods described herein may be encoded as executable instructions embodied in a computer readable medium, including, without limitation, a non-transitory storage device and/or a memory device. Such instructions, when executed by the controller or processing device, cause the controller or processing device to perform at least some of the method steps described herein. The above examples are exemplary only, and thus are not intended to limit in any way the definition and/or meaning of the terms controller and processing device.

For example, controller 208 is programmed to automatically control the flow of fuel from fuel supply lines 214 and 216 to injectors 201 and 202 for each burner 114 at least partially based on a preselected fuel flow schedule stored by controller 208. Additionally or alternatively, controller 208 is programmed to automatically control the flow of fuel from fuel supply lines 214 and 216 to injectors 201 and 202 at least partially based on feedback from suitable sensors (not shown) coupled to burner 114 and/or other components of rotary machine 100 (shown in FIG. 1). Additionally or alternatively, controller 208 is programmed to automatically control the flow of fuel from fuel supply lines 214 and 216 to injectors 201 and 202 at least partially based on commands received from an operator of rotary machine 100. In alternative embodiments, fuel delivery system 200 is configured to control the flow of fuel from fuel supply lines 214 and 216 to injectors 201 and 202 of each burner 114 in any suitable fashion that enables fuel delivery system 200 to function as described herein.

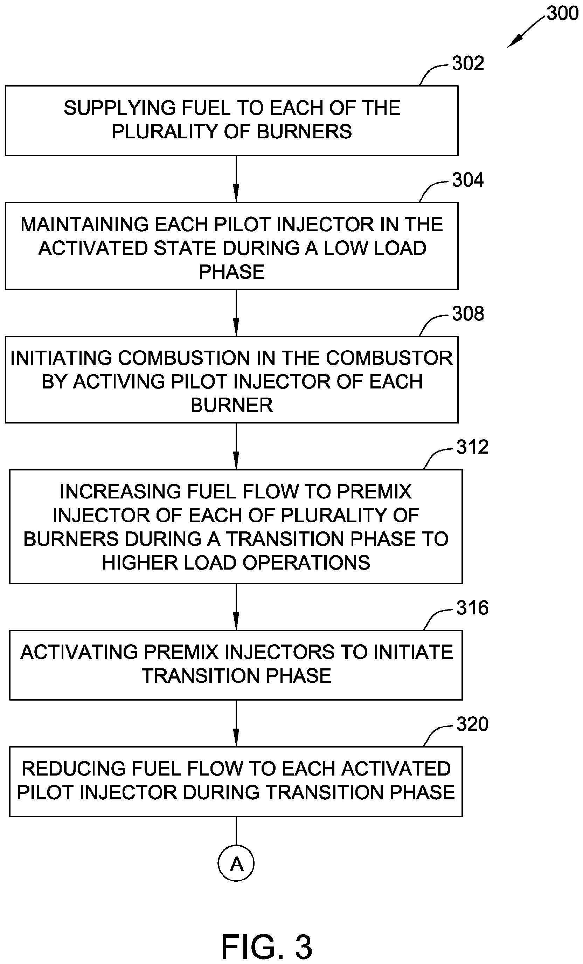

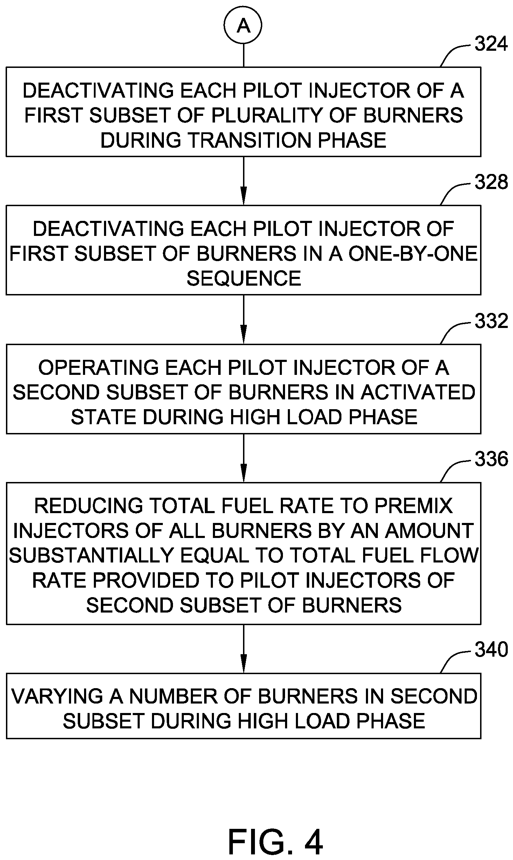

FIGs. 3 and 4 are a flow diagram of a method 300 of operating a combustor, such as combustor section 106 of rotary machine 100 (shown in FIG. 1), that includes a plurality of burners 114. With reference also to FIG. 2, in some embodiments, method 300 is implemented by controller 208, such as by controller 208 receiving sensor and/or operator input, executing programmed instructions, and sending command signals to plurality of valves 206. Alternatively, method 300 is implemented in any suitable fashion.

In the exemplary embodiment, method 300 includes supplying 302 fuel to each of burners 114. For example, controller 208 operates to selectively supply liquid fuel to fuel supply lines 214 and 216 during at least one phase of operation of plurality of burners 114. In alternative embodiments, any suitable fuel is supplied in any suitable fashion that enables method 300 to function as described herein.

In the embodiment according to the herein claimed invention, method 300 includes maintaining 304 each pilot injector 202 in the activated state during a low-load phase. As one example, the low-load phase corresponds to a start-up period of the combustor, and the method further includes initiating 308 combustion in the combustor, such as from an idle state, by activating pilot injector 202 of each burner 114. As another example, the low-load phase corresponds to a period of low demand by load 120 coupled to rotary machine 100 (shown in FIG. 1), such as a period of low electricity demand by a power grid. In the exemplary embodiment, premix injector 201 of each burner 114 is deactivated during the low load phase. According to the herein claimed invention, operation using primarily pilot injector 202 of each burner 114 during the low load phase facilitates a flame stability of burners 114.

Method 300 also includes increasing 312 fuel flow to premix injector 201 of each of plurality of burners 114 during a transition phase to higher load operation. As one example, the transition phase occurs in response to an increase in demand by load 120 (shown in FIG. 1). In the exemplary embodiment, each premix injector 201 is in a deactivated state during the low load phase, as described above, and method 300 further includes activating 316 the premix injectors to initiate the transition phase. As described above, premix injector 201 is configured to provide a substantial amount of the combustion fuel to burner 114 during high load operation, while providing reduced NOx emissions as compared to pilot injector 202. According to the herein claimed invention, method 300 further includes reducing 320 fuel flow to each activated pilot injector 202 during the transition phase, such that NOx emissions are reduced.

According to the herein claimed invention, method 300 also includes deactivating 324 each pilot injector 202 of a first subset of plurality of burners 114 during the transition phase. In the exemplary embodiment, deactivation step 324 includes deactivating 328 each pilot injector 202 of the first subset of burners 114 in a one-by-one sequence. Alternatively, pilot injectors 202 of the first subset of burners 114 are deactivated in any suitable timing and progression that enables method 300 to function as described herein. In some embodiments, the first subset includes all burners 114. In alternative embodiments, the first subset includes fewer than all burners 114, such that after pilot injector 202 of each of the first subset of burners 114 has been deactivated, pilot injector 202 of each of a remaining, non-zero number of burners 114 remains activated.

Additionally, method 300 includes operating 332 each pilot injector 202 of a second subset of burners 114 in the activated state during a high load phase of the combustor. As one example, the high load phase corresponds to a baseload operating state of rotary machine 100 (shown in FIG. 1). The second subset includes more than zero, but fewer than all burners 114. Method 300 also includes reducing 336 a total fuel flow rate to premix injectors 201 of all burners 114 by an amount substantially equal to a total fuel flow rate provided to pilot injectors 202 of the second subset of burners 114, such that a total fuel mass flow rate summed over all activated injectors 201 and 202 of all burners 114 remains sufficient to satisfy the load demand.

In some embodiments, method 300 further includes varying 340 a number of burners 114 in the second subset during the high load phase. As one example, controller 208 adjusts the number of activated pilot injectors 202 based on a predetermined schedule. Additionally or alternatively, controller 200 receives data from suitable sensors (not shown) that represents emissions data and/or on operating data for each burner 114, such as temperature and/or vibration data, and adjusts the number of activated pilot injectors 202 in response. In alternative embodiments, the number of burners 114 in the second subset during the high load phase is selected and/or varied in any suitable fashion that enables method 300 to function as described herein.

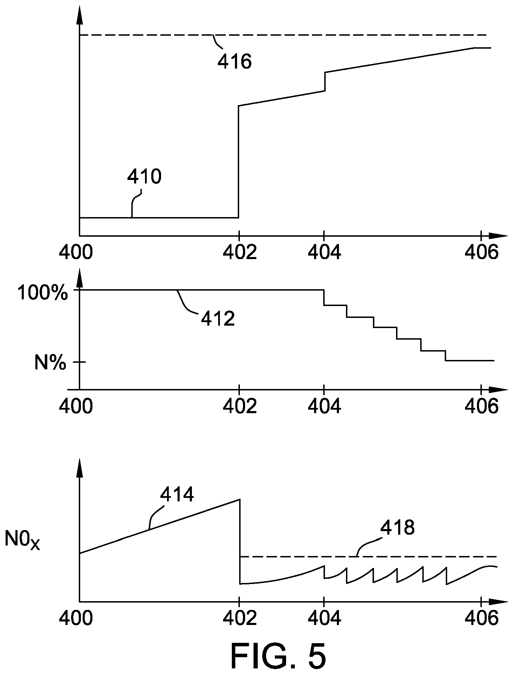

FIG. 5 is a graph of premix stage flame temperature, number of burners having activated pilot injectors 202, and total NOx emissions by all burners 114 during execution of one embodiment of method 300. With reference to FIGs. 2-5, in the illustrated embodiment, each of plurality of burners 114 is in an idle state prior to point 400 along the abscissa. In this instance, method 300 begins with step 308, initiation of combustion by activation of pilot injector 202 of each burner 114, and continues with step 304, maintaining each pilot injector 202 in the activated state during a low-load phase. The low load phase, in this instance a start-up phase, continues to point 402 on the abscissa, when a transition phase to a higher load begins. A flame temperature associated with each premix injector 201, illustrated by line 410, remains at an ambient value throughout the low load phase, as premix injector 201 of each burner 114 is deactivated. Consistent with step 304, a number of pilot injectors 202 activated, illustrated by line 412, remains at 100% throughout the low load phase. A level of NOx emissions, illustrated by line 414, rises steadily throughout the low load phase, consistent with primary supply of fuel through pilot injectors 202.

Method 300 continues in this instance into the transition phase. The transition phase continues to point 406 on the abscissa, where a high load phase begins. In this instance, the transition phase includes step 316, activating the premix injectors, and step 312, increasing fuel flow to premix injector 201 of each of plurality of burners 114. Accordingly, premix stage flame temperature 410 rises abruptly at point 402 and continues to increase throughout the transition phase. Method 300 simultaneously continues with step 320, reducing fuel flow to each activated pilot injector 202, during the transition phase. Accordingly, NOx emissions 414 abruptly decrease at point 402.

Line 418 illustrates a total NOx emissions limit, such as but not limited to an emissions limit established by governmental regulation, for plurality of burners 114. In the illustrated instance, method 300 also includes step 328, deactivating each pilot injector 202 of a first subset of burners 114 in a one-by-one sequence during the transition phase. More specifically, in the illustrated instance, at point 404 on the abscissa, NOx emissions 414 approach limit 418, and pilot injector 202 of at least a first burner 114 is deactivated, lowering NOx emissions. Moreover, an additional burner 114 is sequentially deactivated each time NOx emissions 414 approach limit 418.

The high load phase, in this instance a baseload operating state of rotary machine 100, is reached at point 406. Method 300 continues with step 332, operating each pilot injector 202 of a second subset of burners 114 in the activated state during a high load phase. Although the number of burners 114 in the second subset corresponds to the number of burners 114 having pilot injector 202 activated at the end of the transition phase in the illustrated instance, it should be understood that in alternative embodiments, the number of burners 114 in the second subset may differ from the number of burners 114 having pilot injector 202 activated at the end of the transition phase, as described above.

The second subset of burners 114 is designated as "N%" in FIG. 4, and includes any suitable number of burners that is more than zero and less than all of plurality of burners 114. In particular, in certain embodiments, the number of burners 114 in the second subset is suitably selectable, such as by controller 208 via programmed scheduling or by controller 208 via direct operator command, to at least one of (i) reduce or eliminate a potential for pressure fluctuations and/or pulsations, and (ii) maintain total NOx emissions for plurality of burners 114 below limit 418 without requiring water injection at pilot injectors 202. More specifically, line 416 illustrates a premix flame temperature limit at which there is a potential for pressure fluctuations and/or pulsations in burner 114. In the illustrated instance, the relative reduction in fuel flow rate to premix injectors 201 at step 336, as distributed across all premix injectors 201, is sufficient to maintain a premix stage flame temperature for each burner 114 below limit 416 associated with potential pressure fluctuations and/or pulsations. Moreover, operating pilot injectors 202 of solely the second subset of burners 114, rather than of all burners 114, in the activated state during the high load phase facilitates maintaining an amount of NOx emissions summed over all burners 114 below NOx emissions limit 418, without any water injection at the activated pilot injectors 202. It should be understood that, in some embodiments, the number of burners 114 in the second subset varies after point 406 in order to maintain operation within limits 416 and 418.

Although embodiments of fuel delivery system 200 and method 300 have been described in the context of combustor section 106 of rotary machine 100, it should be understood that in alternative embodiments, fuel delivery system 200 and/or method 300 are implemented with plurality of burners 114 of any suitable combustor.

The above-described embodiments of a fuel delivery system and method of operation overcome at least some disadvantages of known combustors, including but not limited to some known combustors used with gas turbine engines. Specifically, the embodiments described herein include operating each pilot injector of solely a subset of the plurality of burners in an activated state during a high load phase of the combustor, thereby facilitating reduced NOx emissions while limiting a potential for pressure fluctuations and pulsations in the burners. In particular, but not by way of limitation, some such embodiments facilitate operation of the combustor using liquid fuel without any need for water injection to reduce NOx emissions at the pilot stage, also referred to as "dry oil operation." In some cases, dry oil operation reduces a cost of installation and operation, as the cost of the water needed to reduce NOx emissions is removed. As such, the embodiments described herein facilitate use of the combustor over a wide range of operational requirements, using any available fuel supply.

A technical effect of the embodiments described herein includes at least one of (a) operating each pilot injector of a subset of the plurality of burners in an activated state during a high load phase of the combustor, wherein the subset includes more than zero, but fewer than all of the plurality of burners, (b) selecting a number of burners in the subset such that NOx emissions summed over all burners are below a NOx emissions limit for the combustor, without any water injection at the pilot injectors, (c) reducing a total fuel flow rate to the premix injectors of all of the plurality of burners by an amount substantially equal to a total fuel flow rate provided to the pilot injectors of the subset of burners, (d) selecting a number of burners in the subset such that a premix stage flame temperature for each burner is maintained below a limit associated with potential pressure fluctuations and/or pulsations of the burner, (e) varying a number of burners in the subset during the high load phase, (f) deactivating each pilot injector of another subset of the plurality of burners during a transition from a low load phase to the high load phase of the combustor, and (g) deactivating each pilot injector of the other subset of burners in a one-by-one sequence.

Exemplary embodiments of a fuel delivery system and method for a combustor are described above in detail. The systems and methods are not limited to the specific embodiments described herein, but rather, components of systems and/or steps of the methods may be utilized independently and separately from other components and/or steps described herein. For example, the systems and methods may also be used in combination with other combustion systems and methods, and are not limited to practice with only the gas turbine engine assembly as described herein. Rather, the exemplary embodiment may be implemented and utilized in connection with many other combustion system applications.

Although specific features of various embodiments may be shown in some drawings and not in others, this is for convenience only. Moreover, references to "one embodiment" in the above description are not intended to be interpreted as excluding the existence of additional embodiments that also incorporate the recited features. In accordance with the principles of the disclosure, any feature of a drawing may be referenced and/or claimed in combination with any feature of any other drawing.

This written description uses examples to enable any person skilled in the art to practice the disclosure, including making and using any devices or systems and performing any incorporated methods. The patentable scope of the disclosure is defined by the claims, and may include other examples that occur to those skilled in the art.

## Claims

1. A fuel delivery system (200) for a combustor of a gas turbine engine (100), the combustor including a plurality (100%) of burners (114), each burner including a pilot injector (202) and a premix injector (201), said system comprising a controller (208) operatively coupled to, and configured to selectively activate and deactivate, each premix injector (201) and each pilot injector (202) of the plurality (100%) of burners (114), said controller (208) programmed:
to maintain each pilot injector (202) of the plurality (100%) of burners (114) in the activated state and each premix injector (201) in the deactivated state during a low load phase of the combustor;
to increase fuel flow to the premix injector (201) of each of the plurality (100%) of burners (114) and to reduce fuel flow to each activated pilot injector (202) of the plurality (100%) of burners (114) during a transition from the low load phase to a high load phase of the combustor;
**characterized in that** said controller is also programmed to deactivate each pilot injector (202) of a first subset (100-N%) of the plurality (100%) of burners (114) during the transition phase of the combustor; and
to operate each activated pilot injector (202) of a remaining second subset (N%) of the plurality (100%) of burners (114) during the high load phase of the combustor, wherein the second subset (N%) includes more than zero, but fewer than all of the plurality (100%) of burners (114).

2. The fuel delivery system (200) in accordance with claim 1, wherein said controller (208) is further programmed to select a number of burners (114) in the second subset (N%) such that NOx emissions (414) summed over all burners (114) are below a NOx emissions limit (418) for the combustor, without any water injection at the pilot injectors (202).

3. The fuel delivery system (200) in accordance with claim 1 or 2, wherein said controller (208) is further programmed to reduce a total fuel flow rate to the premix injectors (201) of all of the plurality (100%) of burners (114) by an amount substantially equal to a total fuel flow rate provided to the pilot injectors (202) of the second subset (N%) of burners (114).

4. The fuel delivery system (200) in accordance with claim 3, wherein said controller (208) is further programmed to select a number of burners (114) in the second subset (N%) such that a premix stage flame temperature (410) for each burner (114) is maintained below a limit (416) associated with potential pressure fluctuations and/or pulsations of the burner (114).

5. The fuel delivery system (200) in accordance with any of claims 1 to 4, wherein said controller (208) is further programmed to vary a number of burners (114) in the second subset (N%) during the high load phase.

6. The fuel delivery system (200) in accordance with claim 1, wherein said controller (208) is further programmed to deactivate each pilot injector (202) of the first subset (100-N%) of burners (114) in a one-by-one sequence.

7. The fuel delivery system (200) in accordance with any preceding claim, wherein said controller (208) is further programmed to selectively supply a liquid fuel to the combustor during the high load phase.

8. A method (300) of operating a combustor of a gas turbine engine (100) including a plurality (100%) of burners (114), each burner including a pilot injector (202) and a premix injector (201), said method comprising:
supplying (302) fuel to each of the plurality (100%) of burners (114);
maintaining each pilot injector (202) of the plurality (100%) of burners (114) in the activated state and each premix injector (201) in the deactivated state during a low load phase of the combustor;
increasing fuel flow to the premix injector (201) of each of the plurality (100%) of burners (114) and reducing fuel flow to each activated pilot injector (202) of the plurality (100%) of burners (114) during a transition from the low load phase to a high load phase of the combustor;
**characterized by** deactivating each pilot injector (202) of a first subset (100-N%) of the plurality (100%) of burners (114) during the transition phase of the combustor; and
operating (332) each activated pilot injector (202) of a remaining second subset (N%) of the plurality (100%) of burners (114) during the high load phase of the combustor, wherein the subset (N%) includes more than zero, but fewer than all of the plurality (100%) of burners (114).

9. The method (300) in accordance with claim 8, further comprising selecting a number of burners in the second subset (N%) such that NOx emissions (414) summed over the plurality (412) all burners (114) are below a NOx emissions limit (418) for the combustor, without any water injection at the pilot injectors (202).

10. The method (300) in accordance with claim 8 or 9, further comprising reducing (336) a total fuel flow rate to the premix injectors (201) of all of the plurality (100%) of burners (114) by an amount substantially equal to a total fuel flow rate provided to the pilot injectors (202) of the second subset (N%) of burners (114).

11. The method (300) in accordance with claim 10, further comprising selecting a number of burners (114) in the second subset (N%) such that a premix stage flame temperature (410) for each burner (114) is maintained below a limit (416) associated with potential pressure fluctuations and/or pulsations of the burner.

12. The method (300) in accordance with any of claims 8 to 11, further comprising varying (340) a number of burners (114) in the second subset (N%) during the high load phase.

## Patentansprüche

1. Brennstoffausgabesystem (200) für eine Brennkammer eine Gasturbine (100), wobei die Brennkammer eine Vielzahl (100 %) von Brennern (114) einschließt, wobei jeder Brenner einen Pilotinjektor (202) und einen Vormischinjektor (201) einschließt, wobei das System eine Steuerung (208) umfasst, die operativ mit jedem Vormischinjektor (201) und jedem Pilotinjektor (202) der Vielzahl (100 %) von Brennern (114) gekoppelt ist und konfiguriert ist, diese selektiv zu aktivieren und zu deaktivieren, wobei die Steuerung (208) programmiert ist:
zum Halten jedes Pilotinjektors (202) der Vielzahl (100 %) von Brennern (114) in dem aktivierten Zustand und jedes Vorm ischinjektors (201) in dem deaktivierten Zustand während einer Niedriglastphase der Brennkammer;
zum Erhöhen des Brennstoffstroms zu dem Vormischinjektor (201) jedes der Vielzahl (100 %) von Brennern (114) und Reduzieren des Brennstoffstroms zu jedem aktivierten Pilotinjektor (202) der Vielzahl (100 %) von Brennern (114) während eines Übergangs von der Niedriglastphase zu einer Hochlastphase der Brennkammer;
**dadurch gekennzeichnet, dass** die Steuerung auch zum Deaktivieren jedes Pilotinjektors (202) einer ersten Teilmenge (100-N %) der Vielzahl (100 %) von Brennern (114) während der Übergangsphase der Brennkammer programmiert ist; und
zum Betreiben jedes aktivierten Pilotinjektors (202) einer verbleibenden zweiten Teilmenge (N %) der Vielzahl (100 %) von Brennern (114) während der Hochlastphase der Brennkammer, wobei die zweite Teilmenge (N %) mehr als null, aber weniger als alle der Vielzahl (100 %) von Brennern (114) einschließt.

2. Brennstoffausgabesystem (200) nach Anspruch 1, wobei die Steuerung (208) ferner zum Auswählen einer Anzahl von Brennern (114) in der zweiten Teilmenge (N %) programmiert ist, sodass NOx-Emissionen (414) über alle Brenner (114) summiert ohne Wassereinspritzung an den Pilotinjektoren (202) unter einer NOx-Emissionsgrenze (418) für die Brennkammer liegt.

3. Brennstoffausgabesystem (200) nach Anspruch 1 oder 2, wobei die Steuerung (208) ferner zum Reduzieren einer Gesamtbrennstoffflussrate zu den Vormischinjektoren (201) aller der Vielzahl (100 %) von Brennern (114) um einen Betrag, der im Wesentlichen gleich einer Gesamtbrennstoffflussrate ist, die den Pilotinjektoren (202) der zweiten Teilmenge (N %) von Brennern (114) bereitgestellt wird, programmiert ist.

4. Brennstoffausgabesystem (200) nach Anspruch 3, wobei die Steuerung (208) ferner zum Auswählen einer Anzahl von Brennern (114) in der zweiten Teilmenge (N %) programmiert ist, sodass eine Vormischstufen-Flammentemperatur (410) für jeden Brenner (114) unter einer Grenze (416) gehalten wird, die mit potentiellen Druckschwankungen und/oder Pulsationen des Brenners (114) verbunden ist.

5. Brennstoffausgabesystem (200) nach einem der Ansprüche 1 bis 4, wobei die Steuerung (208) ferner zum Variieren einer Anzahl von Brennern (114) in der zweiten Teilmenge (N %) während der Hochlastphase programmiert ist.

6. Brennstoffausgabesystem (200) nach Anspruch 1, wobei die Steuerung (208) ferner zum Deaktivieren jedes Pilotinjektors (202) der ersten Teilmenge (100-N %) von Brennern (114) einzeln aufeinander abfolgend programmiert ist.

7. Brennstoffausgabesystem (200) nach einem der vorstehenden Ansprüche, wobei die Steuerung (208) ferner zum selektiven Zuführen eines flüssigen Brennstoffs zu der Brennkammer während der Hochlastphase programmiert ist.

8. Verfahren (300) zum Betreiben einer Brennkammer einer Gasturbine (100), das eine Vielzahl (100 %) von Brennern (114) einschließt, wobei jeder Brenner einen Pilotinjektor (202) und einen Vormischinjektor (201) einschließt, wobei das Verfahren umfasst:
Zuführen (302) von Brennstoff zu jedem der Vielzahl (100 %) von Brennern (114);
Halten jedes Pilotinjektors (202) der Vielzahl (100 %) von Brennern (114) in dem aktivierten Zustand und jedes Vorm ischinjektors (201) in dem deaktivierten Zustand während einer Niedriglastphase der Brennkammer;
Erhöhen des Brennstoffstroms zu dem Vormischinjektor (201) jedes der Vielzahl (100 %) von Brennern (114) und Reduzieren des Brennstoffstroms zu jedem aktivierten Pilotinjektor (202) der Vielzahl (100 %) von Brennern (114) während eines Übergangs von der Niedriglastphase zu einer Hochlastphase der Brennkammer;
**gekennzeichnet durch** Deaktivieren jedes Pilotinjektors (202) einer ersten Teilmenge (100-N %) der Vielzahl (100 %) von Brennern (114) während der Übergangsphase der Brennkammer; und
Betreiben (332) jedes aktivierten Pilotinjektors (202) einer verbleibenden zweiten Teilmenge (N %) der Vielzahl (100 %) von Brennern (114) während der Hochlastphase der Brennkammer, wobei die Teilmenge (N %) mehr als null, aber weniger als alle der Vielzahl (100 %) von Brennern (114) einschließt.

9. Verfahren (300) nach Anspruch 8, ferner umfassend das Auswählen einer Anzahl von Brennern in der zweiten Teilmenge (N %), sodass NOx-Emissionen (414) über die Vielzahl (412) aller Brenner (114) summiert ohne Wassereinspritzung an den Pilotinjektoren (202) unter einer NOx-Emissionsgrenze (418) für die Brennkammer liegen.

10. Verfahren (300) nach Anspruch 8 oder 9, ferner umfassend das Reduzieren (336) einer Gesamtbrennstoffflussrate zu den Vormischinjektoren (201) aller der Vielzahl (100 %) von Brennern (114) um einen Betrag, der im Wesentlichen gleich einer Gesamtbrennstoffflussrate ist, die den Pilotinjektoren (202) der zweiten Teilmenge (N %) von Brennern (114) bereitgestellt wird.

11. Verfahren (300) nach Anspruch 10, ferner umfassend das Auswählen einer Anzahl von Brennern (114) in der zweiten Teilmenge (N %), sodass eine Vormischstufen-Flammentemperatur (410) für jeden Brenner (114) unter einer Grenze (416) gehalten wird, die mit potentiellen Druckschwankungen und/oder Pulsationen des Brenners verbunden ist.

12. Verfahren (300) nach einem der Ansprüche 8 bis 11, ferner umfassend das Variieren (340) einer Anzahl von Brennern (114) in der zweiten Teilmenge (N %) während der Hochlastphase.

## Revendications

1. Système d'alimentation en carburant (200) pour une chambre de combustion d'un moteur à turbine à gaz (100), la chambre de combustion incluant une pluralité (100 %) de brûleurs (114), chaque brûleur incluant un injecteur pilote (202) et un injecteur de prémélange (201), ledit système comprenant un dispositif de commande (208) couplé fonctionnellement à, et configuré pour activer et désactiver sélectivement, chaque injecteur de prémélange (201) et chaque injecteur pilote (202) de la pluralité (100 %) de brûleurs (114), ledit dispositif de commande (208) étant programmé :
pour maintenir chaque injecteur pilote (202) de la pluralité (100 %) de brûleurs (114) à l'état activé et chaque injecteur de prémélange (201) à l'état désactivé pendant une phase de faible charge de la chambre de combustion ;
pour augmenter le débit de carburant à l'injecteur de prémélange (201) de chacune parmi la pluralité (100 %) de brûleurs (114) et pour réduire l'écoulement du carburant à chaque injecteur pilote (202) de la pluralité (100 %) de brûleurs (114) pendant une transition de la phase à faible charge à une phase à charge élevée de la chambre de combustion ;
**caractérisé en ce que** ledit dispositif de commande est également programmé pour désactiver chaque injecteur pilote (202) d'un premier sous-ensemble (100-N %) de la pluralité (100 %) de brûleurs (114) pendant la phase de transition de la chambre de combustion ; et
pour actionner chaque injecteur pilote activé (202) d'un second sous-ensemble restant (N %) de la pluralité (100 %) de brûleurs (114) pendant la phase de charge élevée de la chambre de combustion, dans lequel le second sous-ensemble (N %) inclut plus que zéro, mais moins que la totalité de la pluralité (100 %) de brûleurs (114).

2. Système d'alimentation en carburant (200) selon la revendication 1, dans lequel ledit dispositif de commande (208) est en outre programmé pour sélectionner un nombre de brûleurs (114) dans le second sous-ensemble (N %) de sorte que des émissions de NOx (414) additionnées sur tous les brûleurs (114) soient inférieures à une limite d'émissions de NOx (418) pour la chambre de combustion, sans injection d'eau au niveau des injecteurs pilotes (202).

3. Système d'alimentation en carburant (200) selon la revendication 1 ou 2, dans lequel ledit dispositif de commande (208) est en outre programmé pour réduire un débit total de carburant vers les injecteurs de prémélange (201) de la totalité de la pluralité (100 %) de brûleurs (114) d'une quantité sensiblement égale à un débit total de carburant fourni aux injecteurs pilotes (202) du second sous-ensemble (N %) de brûleurs (114).

4. Système d'alimentation en carburant (200) selon la revendication 3, dans lequel ledit dispositif de commande (208) est en outre programmé pour sélectionner un nombre de brûleurs (114) dans le second sous-ensemble (N %) de sorte qu'une température de flamme de la phase de prémélange (410) pour chaque brûleur (114) soit maintenue en dessous d'une limite (416) associée à des fluctuations de pression potentielles et/ou à des pulsations du brûleur (114).

5. Système d'alimentation en carburant (200) selon l'une quelconque des revendications 1 à 4, dans lequel ledit dispositif de commande (208) est en outre programmé pour modifier un nombre de brûleurs (114) dans le second sous-ensemble (N %) pendant la phase de charge élevée.

6. Système d'alimentation en carburant (200) selon la revendication 1, dans lequel ledit dispositif de commande (208) est en outre programmé pour désactiver chaque injecteur pilote (202) du premier sous-ensemble (100-N %) de brûleurs (114) dans une séquence une à une.

7. Système d'alimentation en carburant (200) selon l'une quelconque des revendications précédentes, dans lequel ledit dispositif de commande (208) est en outre programmé pour fournir sélectivement un carburant liquide à la chambre de combustion pendant la phase de charge élevée.

8. Procédé (300) de fonctionnement d'une chambre de combustion d'un moteur à turbine à gaz (100) incluant une pluralité (100 %) de brûleurs (114), chaque brûleur incluant un injecteur pilote (202) et un injecteur de prémélange (201), ledit procédé comprenant :
la fourniture (302) de carburant à chacun de la pluralité (100 %) de brûleurs (114) ;
le maintien de chaque injecteur pilote (202) de la pluralité (100 %) de brûleurs (114) à l'état activé et de chaque injecteur de prémélange (201) à l'état désactivé pendant une phase de faible charge de la chambre de combustion ;
l'augmentation du débit de carburant vers l'injecteur de prémélange (201) de chacun de la pluralité (100 %) de brûleurs (114) et la réduction de l'écoulement de carburant vers chaque injecteur pilote activé (202) de la pluralité (100 %) de brûleurs (114) pendant une transition de la phase de faible charge à une phase de charge élevée de la chambre de combustion ;
**caractérisé par** la désactivation de chaque injecteur pilote (202) d'un premier sous-ensemble (100-N %) de la pluralité (100 %) de brûleurs (114) pendant la phase de transition de la chambre de combustion ; et
l'actionnement (332) de chaque injecteur pilote activé (202) d'un second sous-ensemble restant (N %) de la pluralité (100 %) de brûleurs (114) pendant la phase de charge élevée de la chambre de combustion, dans lequel le sous-ensemble (N %) comprend plus que zéro, mais moins que la totalité de la pluralité (100 %) de brûleurs (114).

9. Procédé (300) selon la revendication 8, comprenant en outre la sélection d'un nombre de brûleurs dans le second sous-ensemble (N %) de telle sorte que les émissions de NOx (414) additionnées sur la pluralité (412) tous les brûleurs (114) soient en dessous d'une limite d'émissions de NOx (418) pour la chambre de combustion, sans injection d'eau au niveau des injecteurs pilotes (202).

10. Procédé (300) selon la revendication 8 ou 9, comprenant en outre la réduction (336) d'un débit de carburant total vers les injecteurs de prémélange (201) de la totalité de la pluralité (100 %) de brûleurs (114) d'une quantité sensiblement égale à un débit de carburant total fourni aux injecteurs pilotes (202) du second sous-ensemble (N %) de brûleurs (114).

11. Procédé (300) selon la revendication 10, comprenant en outre la sélection d'un nombre de brûleurs (114) dans le second sous-ensemble (N %) de sorte qu'une température de flamme de la phase de prémélange (410) pour chaque brûleur (114) soit maintenue en dessous d'une limite (416) associée à des fluctuations de pression potentielles et/ou à des pulsations du brûleur.

12. Procédé (300) selon l'une quelconque des revendications 8 à 11, comprenant en outre la variation (340) d'un nombre de brûleurs (114) dans le second sous-ensemble (N %) pendant la phase de charge élevée.
